# EUROPEAN PATENT APPLICATION

(11) **EP 1 418 290 A1**
(43) Date of publication of application: **12.05.2004**
(21) Application number: 02425683.6
(22) Date of filing: 08.11.2002
(51) Int. Cl.: E04F 15/02, E04F 13/08, B29C 45/14

(54) **Method for making leather tiles and tiles thus obtained**

(71) Applicant: Vagnoli, Ivano, 56024 Ponte a Egola, S. Miniato (PI) (IT)
(72) Inventor: Vagnoli, Ivano, 56024 Ponte a Egola, S. Miniato (PI) (IT)
(74) Representative: Celestino, Marco

(57) **Abstract**

A leather tile (10) comprises a semifinished leather tile (1) having a first face (2), a second face (3), side edges (4) and a hole (5). In particular, hole (5) has a desired shape and extends between first face (2) and second face (3) of tile (1). Also a plurality of holes, of desired shape, which define scripts, decorations, designs, etc., can be made, as well as no holes at all . The hole (5) is filled with hardened resin (7) in order to show, on first face (2), a portion of resin (6) matching the hole (5) same. The hardened resin (7) extends from first face (2) to second face (3) up to lining completely the lower surface thereof. This way, the resulting tile (10) comprises a leather layer (1) to which a layer of plastic resin (7) of a certain thickness is integral. This allows to level the lower surface of leather layer (1) and to level the overall thickness.

## Description

### Field of the invention

The present invention relates to the building industry and more precisely it relates to a method for making leather tiles and leather skirting boards for room lining.

Furthermore, the invention relates to tiles made with this method.

The word leather in the following description is referred to chrome leather, tanned leather, hide, imitation leather, etc.

### Background of the invention

Leather tiles have been made occasionally; one of the main problems met is the leather thickness irregularity that affects the final surface.

Even when a leather sheet is arranged on a wooden base, as is described in US 4864790, the problem is not solved; on the contrary, the irregularity of the leather sheets are much more enhanced on the wooden layer.

Similarly, a material called salpa, i.e. boards of pressed chips of hide/leather, is used as base for leather tiles meeting the same problems.

Moreover, a problem of irregularity is also present along the contact sides between adjacent leather tiles, with negative aesthetical effect on the final lining.

Another problematic aspect is the decoration of the leather tiles that, since they have to be waterproof, they cannot have incisions or cuts, which could be not easily treated, and would be occasion of dirt accumulation.

### Summary of the invention

It is therefore object of the present invention to provide a method for making leather tiles for eliminating the thickness irregularity of the leather sheets and to obtain a uniform lining.

It is another object of the present invention to provide a method for making leather tiles to facilitate the side matching of the leather tiles with one another when laying the lining.

It is a particular object of the present invention to provide a method for making leather tiles suitable for providing on them desired fancy decorations.

It is a further object of the present invention to provide a leather tile obtained with this method and that has the same advantages.

These and other objects are achieved by the method for making leather tiles, according to the present invention, whose feature is that it comprises the steps of:
- preparing a semifinished leather tile having a first face and a second face;
- introducing the semifinished leather tile in a plastic resin injection mould, with the first face oriented towards the bottom of the mould;
- introducing the plastic resin in the mould, the resin filling the remaining free space;
- hardening the plastic resin that becomes integral to the semifinished leather tile.

Before the step of introducing the semifinished leather tile in the mould a step can be provided of making, e.g. by milling, at least one through hole of predetermined shape suitable for connecting the first face to the second face of the semifinished leather tile.

Therefore, during the step of introducing the plastic resin in the mould, the resin fills the or each hole of the semifinished leather tile. This way, at the end of the work the hardened resin is visible on the first face since it fills the hole, which can form a design, a script, a decoration, etc.

Advantageously, the mould is shaped to allow a portion of the resin to harden on either all or only a part of the second face of the semifinished leather tile. In both cases, the resin is anchored very solid to the semifinished leather tile and cannot be released from the first face, and creating a level rigid layer.

In particular, the hardened resin may have a side portion exceeding the second face of the semifinished leather tile, thus creating an exterior finishing edge of resin that surrounds the leather.

Preliminarily to the step of introducing the semifinished leather tile in the mould a step can be provided of machining the side edges for facilitating the approach of the leather tiles to one another when laying the lining. In particular, the machining step provides beveling the edge of the second face.

According to another aspect of the invention, a leather tile has a first face, a second face and a layer of resin fixed to the second face.

Advantageously, the tile has at least one through hole having predetermined shape between the first face and the second face, the or each hole being filled with resin in order to form when hardened a pattern, a script, a decoration according to said predetermined shape.

In particular, the hardened resin can extend from the hole to all or part of the surface of the second face, so that the resulting tile has in any case a first layer of leather and a second layer of hardened resin that mechanically prevents any release of resin from the first face. The layer of resin has the object to strengthen the tile and to level its thickness.

Advantageously, the hardened resin may have a side portion exceeding the second face of the semifinished leather tile, thus creating an exterior finishing edge that surrounds the leather.

Furthermore, the tile can be provided with machined side edges, in particular beveled edges, which make easier the approach of adjacent leather tiles when laying the lining.

### Brief description of the drawings

Further characteristics and the advantages of the method according to the invention for making leather tiles will be made clearer with the following description of an embodiment thereof, exemplifying but not limitative, with reference to the attached designs, wherein:
- figure 1 shows a top plan view of a possible embodiment of a leather tile according to the invention;
- figures 2A shows a cross sectional view according to arrows II-II of the leather tile of figure 1;
- figures 2B, 2C and 2D show a cross sectional view of further alternative embodiments of the leather tile of figures 1 and 2A;
- figure 3 shows a perspective view of a leather tile, according to the invention, before moulding plastic resin thereon;
- figure 4 shows diagrammatically a cross sectional view of a leather tile in the step of application of a plastic resin layer, by means of injection moulding;
- figure 5 shows the tile of figure 3 after the application of a plastic resin injection;
- figures 6 and 7 show respectively a cross sectional view and a perspective view of an alternative embodiment of the leather tile with plastic resin injection of figure 5;
- figure 8 shows a floor lined with the leather tiles of figure 5.

### Description of a preferred embodiment

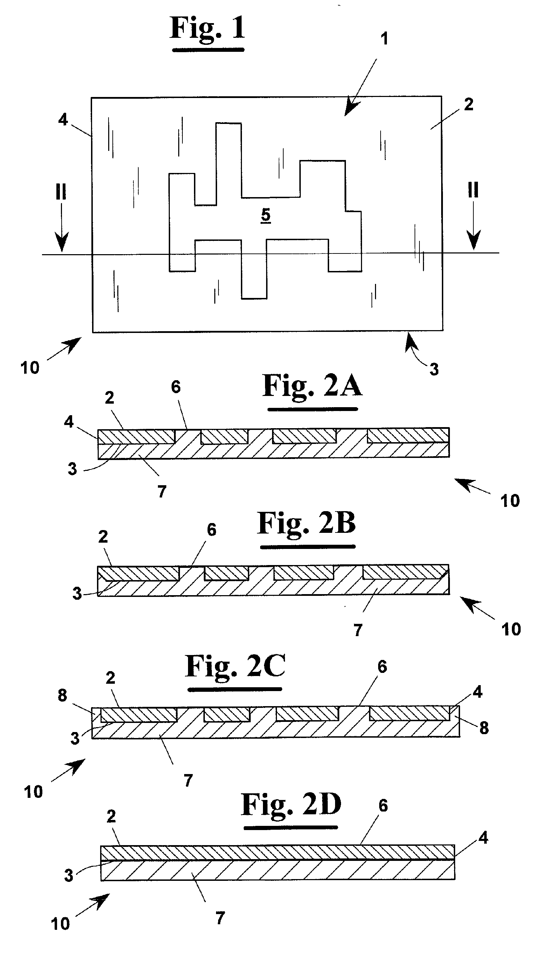

With reference to figures 1 and 2A, according to a possible embodiment of the invention, a leather tile 10 comprises a semifinished leather tile 1 having a first face 2, a second face 3, side edges 4 and a hole 5. In particular, hole 5 has a desired shape and extends between first face 2 and second face 3 of tile 1. Even if the semifinished leather tile 1 shown in figure 1 has only a hole 5, it may have a plurality of holes, of desired shape, which define scripts, decorations, designs, etc.

As shown in figure 2A in a cross sectional view according to arrows II-II of tile 10, hole 5 is filled with hardened resin 7 in order to show, on first face 2, a portion of resin 6 matching hole 5.

In particular, in the case shown in figures from 2A to 2C, the hardened resin 7 extends from first face 2 to second face 3 up to lining completely the lower surface thereof. This way, the resulting tile 10 comprises a leather layer 1 to which a layer of plastic resin 7 of a certain thickness is integral. This allows to level the lower surface of leather layer 1 and to level the overall thickness.

This same last result is obtained with the embodiment of figure 2D, without hole and then without through resin injection.

A first aesthetical effect is obtained when leather layer 1 and plastic resin layer 7 have the same extension figure 2A and 2B; in this case the sole leather face 2 is visible from the above and, if present, the pattern in plastic resin 6.

A second aesthetical effect is obtained when the layer of resin 7 has a side portion 8 exceeding face 3, thus forming substantially an exterior edge that surrounds the leather layer of tile 1 figure 2C.

In the first case, to facilitate the approach between adjacent leather tiles when laying the lining, the leather layer 1 of tile 10 can be subject to machining the side edges 4 figure 2B, in particular making a bevel.

With reference to figures from 3 to 5, according to the invention, the method for making a tile 1 as above described provides the following steps.

A semifinished leather tile 1 is previously cut according to a desired shape, for example rectangular, and, as in the present case, at least one through hole 5 is milled.

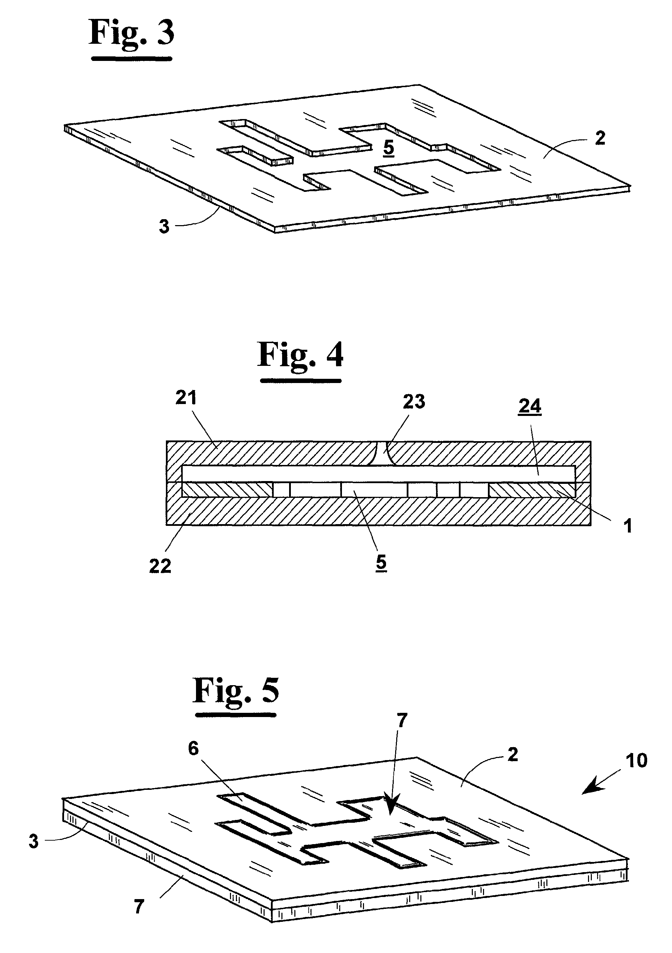

The semifinished leather tile 1 is then put into a mould 20 for plastic resin injection, formed by two mould halves 21 and 22, with first face 2 oriented towards the bottom of mould 20 figure 4. In mould 20 the plastic resin is then injected, through a channel 23, thus filling the remaining free space adjacent to semifinished leather tile 1. In particular, the resin fills hole 5 and recess 24 within half mould 21 up to filling it completely. This way, the pattern 6 is formed visible on first face 2 of tile 1 and a layer 7 of hardened resin is formed fixed to face 3 that levels its thickness figure 5.

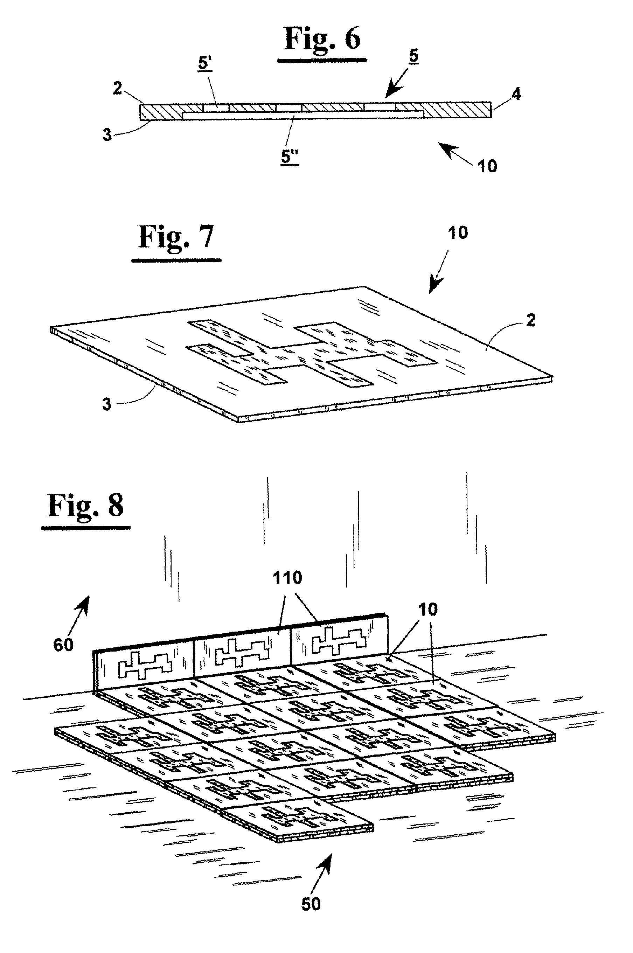

In an alternative embodiment, as shown in figures 6 and 7, hole 5 has a first portion 5' that extends starting from face 2 for a certain depth and has a larger second portion 5" that extends from the first portion 5' up to face 3. In this case, during the injection the resin fills only hole 5 and the hardened resin in second portion 5" of hole 5 is a mechanical fastening to leather layer 1. This solution can be used, for example, when a very thin leather tile 10 is requested.

Finally, in figure 8 a floor 50 is shown partially lined with leather tiles 10. Of course leather tiles 10 can be used also for lining walls 60, or can be used as skirting boards 110 of rectangular shape.

Obviously, the tiles, in addition to the square and rectangular shape may have also hexagonal, octagonal, triangular shape, etc.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for making leather tiles **characterised in that** it comprises the steps of:
- preparing a semifinished leather tile having a first face and a second face;
- introducing said semifinished leather tile in a plastic resin injection mould, with said first face oriented towards the bottom of the mould;
- introducing the plastic resin in said mould, the resin filling the remaining free space;
- hardening the plastic resin that becomes integral to said semifinished leather tile.

2. Method, according to claim 1, wherein before said step of introducing said semifinished leather tile in said mould a step is provided of making, e.g. by milling, at least one through hole of predetermined shape suitable for connecting said first face and said second face of said semifinished leather tile, whereby during said step of introducing the plastic resin in said mould said plastic resin fills said or each hole of said semifinished leather tile, after hardening said resin resulting thus visible from said first face forming a design, a script, a decoration, etc. matching said hole.

3. Method, according to claim 1, wherein said mould is shaped to allow a portion of said resin to harden at said second face of the semifinished leather tile, said resin sticking to said semifinished leather tile thus creating a strengthening layer that levels its thickness.

4. Method, according to claim 1, wherein said hardened resin has a side portion exceeding said second face of said semifinished leather tile, said side portion creating an exterior edge that surrounds the leather tile.

5. Method, according to claim 1, wherein, preliminarily to said step of introducing said semifinished leather tile into said mould, a step is provided of machining the side edges for facilitating the approach of the leather tiles to one another when laying the lining.

6. Leather tile **characterised in that** it comprises a first face, a second face and a layer of plastic resin fixed to said second face.

7. Leather tile, according to claim 6, having at least one through hole having predetermined shape between said first face and said second face, said or each hole being filled with hardened resin in order to form a pattern or a script matching said shape at said first face.

8. Leather tile according to claim 6, wherein said hardened resin extends along said second face, whereby said tile comprises a first layer of leather and a second layer of hardened resin stuck with each other, thus strengthening the tile and levelling the thickness.

9. Leather tile, according to claim 6, wherein said hardened resin has a side portion exceeding the second face of the semifinished leather tile, said hardened resin thus creating an exterior edge that surrounds the leather.

10. Leather tile, according to claim 7, having machined side edges that make easier the approach with each other of adjacent leather tiles when laying a lining.
